(19) **Europäisches Patentamt**

**European Patent Office**

**Office européen des brevets**

(11) **EP 1 399 343 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(21) Anmeldenummer: **02758243.6**

(22) Anmeldetag: **18.06.2002**

(51) Int Cl.$^7$: **B60S 3/00**

(86) Internationale Anmeldenummer:
**PCT/EP2002/006729**

(87) Internationale Veröffentlichungsnummer:
**WO 2003/002391 (09.01.2003 Gazette 2003/02)**

(54) **MOBILE REINIGUNGS- BZW. WASCHANLAGE FÜR EINKAUFSWÄGEN**

MOBILE CLEANING OR WASHING SYSTEM FOR SHOPPING TROLLEYS

INSTALLATION DE NETTOYAGE ET DE LAVAGE MOBILE DESTINEE A DES CHARIOTS DE SUPERMARCHE

(84) Benannte Vertragsstaaten:
**AT BE CH CY DE DK ES FI FR GB GR IE IT LI LU MC NL PT SE TR**

(30) Priorität: **28.06.2001 DE 10131398**

(43) Veröffentlichungstag der Anmeldung:
**24.03.2004 Patentblatt 2004/13**

(73) Patentinhaber: **Rosenberger, Paul**
**31863 Coppenbrügge (DE)**

(72) Erfinder:
• **Der Erfinder hat auf seine Nennung verzichtet.**

(74) Vertreter: **Rupp, Christian**
**Mitscherlich & Partner,**
**Patent- und Rechtsanwälte,**
**Postfach 33 06 09**
**80066 München (DE)**

(56) Entgegenhaltungen:
**FR-A- 2 774 051**     **US-A- 3 698 029**
**US-A- 5 993 739**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

HINTERGRUND UND EINSATZBEREICH DER ERFINDUNG

Die vorliegende Erfindung bezieht sich allgemein auf den Bereich verfahrenstechnischer Reinigungsanlagen, insbesondere auf mobile Reinigungssysteme für Einkaufswägen, die aus mehreren Reinigungsstationen bestehen, wobei eine neue, kreislaufartige Anordnung der einzelnen Stationen verwendet wird, um verfahrenstechnische Vorteile und damit eine höhere Wirtschaftlichkeit des gesamten Reinigungssystems zu erzielen.

Wenn im Folgenden von Einkaufswägen die Rede ist, so sind damit Transportbehältnisse gemeint, die heute hauptsächlich in größeren Läden, Lebensmittelgeschäften und Supermärkten eingesetzt werden, um den Kunden den Transport der im Geschäft ausgesuchten Waren zur Kasse und gegebenenfalls den Transport der an der Kasse bezahlten Waren zu einem vor dem Geschäft geparkten Transportfahrzeug zu erleichtern. Aufgrund der häufigen Benutzung sowie infolge von in den Einkaufswägen als Restmüll zurückgebliebenen Warenrückständen werden diese Einkaufswägen innerhalb kurzer Zeit schmutzig, so dass es aus hygienischen und gesundheitlichen Gründen notwendig ist, benutzte Einkaufswägen in regelmäßigen Zeitabständen einer gründlichen Reinigung zu unterziehen, um den Lebensmittel-Hygienebestimmungen Rechnung zu tragen.

Die Erfindung bezieht sich gleichermaßen auf die Reinigung von vergleichbaren Transporteinrichtungen, wie Kästen, Kisten, und sonstige Behälter.

Während früher Einkaufswägen noch manuell unter Zuhilfenahme chemischer Reinigungsmittel geschrubbt und gewaschen werden mussten, werden heute in zunehmendem Maße vollautomatische Reinigungsanlagen verwendet, die den Reinigungsprozess wesentlich effizienter durchführen und somit eine große Erleichterung darstellen. Zudem kann bei Einsatz vollautomatisch arbeitender Reinigungsanlagen ein Großteil des in einem Geschäft angestellten Reinigungspersonals eingespart werden.

Da sich die zu reinigenden Einkaufswägen verschiedener Geschäfte an unterschiedlichen Orten befinden und vor Ort gereinigt werden müssen, ist es erforderlich, dass die automatische Reinigungsanlage zu den jeweiligen Einsatzorten transportiert werden kann.

Herkömmliche mobile Reinigungs- bzw. Waschanlagen für Einkaufswägen aller Art verfügen in der Regel über mindestens eine Reinigungsstation, eine Wasserwiederaufbereitungsanlage mit Pumpen, Ventilen, Filtern, Rohrleitungen, Behältern und/oder Messgeräten, eine Regelungs- und Steuerungseinheit, ein Gehäuse, in dem die aufgezählten Komponenten installiert sind, sowie eine Transportvorrichtung, auf der das Gehäuse befestigt ist.

Gemäß dem Stand der Technik sind verschiedene Lösungen für das Problem der automatischen Reinigung von Einkaufswägen verfügbar, wobei jede dieser Lösungen für einen speziellen Anwendungszweck optimiert ist. Mit jeder dieser Lösungen sind daher bestimmte Einschränkungen verbunden. Um einige der wichtigsten dieser Lösungen ansatzweise erklären zu können, ist es notwendig, kurz auf ihre wichtigsten Aspekte einzugehen.

Die in der deutschen Offenlegungsschrift DE-A-198 57 915 A1 vorgeschlagene Erfindung bezieht sich auf eine mobile Reinigungs- bzw. Waschanlage für Einkaufswägen aller Art, wobei eine Waschbox zusammen mit einer Reinigungsflüssigkeits- oder Wasseraufbereitungsanlage durch Verbindungsleitungen auf einem Grundgestell montiert ist, welches wiederum auf einer Transportvorrichtung befestigt ist. Zur Reinigung der Einkaufswägen wird die mobile Reinigungs- bzw. Waschanlage am gewünschten Einsatzort entweder von der Transportvorrichtung auf den Stützen des Grundgestells abgestellt, oder sie verbleibt auch während des Reinigungsbetriebs auf der Transportvorrichtung.

In der deutschen Gebrauchsmusteranmeldung DE-U-298 12 683 wird ein mobiler Waschcontainer offenbart, der insbesondere zur Reinigung von Einkaufswägen, Gitterboxen und Warenkörben verwendet werden kann. Bei diesem mobilen Waschcontainer handelt es sich um einen genormten Eurocontainer. Nachdem der Restmüll mit Hilfe eines Absauggebläses in eine Auffangschale geleitet wurde, werden die zu reinigenden Transportbehältnisse durch eine Waschstraße geführt, die über Hochdruckdüsen, bewegliche und verstellbare Waschbürsten, Desinfektionsdüsen, einen Trockenluftschacht sowie eine Ölsprühvorrichtung zur Besprühung der Räder und Drehachsen der zu reinigenden Transportbehältnisse verfügt. Für eine zusätzliche Hygiene sorgt die Besprühung der zu reinigenden Transportbehältnisse mit einem Desinfektionsmittel über eigens dafür vorgesehene Desinfektionsdüsen. Außerdem ist in den mobilen Waschcontainer eine Wasserrückflussreinigung integriert, die eine Wasserwiederaufbereitung durchführt. Kraft eines autarken Stromaggregats kann dieser Waschcontainer überall eingesetzt werden, ohne auf externe Stromversorgungseinrichtungen angewiesen zu sein.

Die deutsche Gebrauchsmusteranmeldung DE-U-299 01 282 betrifft ein Waschsystem für Einkaufswägen, das mit einer eigenen Energieversorgungseinheit ausgerüstet ist. Dabei kann es sich vorzugsweise um ein Dieselaggregat handeln, das elektrischen Strom erzeugt, um die in dem offenbarten Waschsystem enthaltenen elektrischen, pneumatischen sowie hydraulischen Komponenten betreiben zu können. Das Waschsystem verfügt außerdem über eine Säuberungskomponente, die die verwendete Reinigungsflüssigkeit derart säubert, dass diese nicht so oft ausgewechselt werden muss. Darüber hinaus ist eine Gebläselufttrocknung integriert, um die Einkaufswägen nach der Wäsche zu trocknen. Ferner weist das Waschsystem auch Komponenten auf, die eine Schmierung der Räder und Radachsen bewerkstelligen.

In der deutschen Patentanmeldung DE-C-38 28 035 ist eine ebenerdig aufstellbare Maschine zum Reinigen von Servierwägen, Borddienst- oder Küchentransportwägen oder ähnlichen Transportwägen für Lebensmittel offenbart, in der die Transportwägen der Reinigungsmaschine über eine Rampe manuell zugeführt, dann automatisch geöffnet, vorgewaschen und gewaschen, gespült, getrocknet und wieder manuell über eine Rampe abgeführt werden. Die Reinigungsmaschine verfügt dabei über hintereinander angeordnete Stationen zum Vorwaschen, Waschen, Spülen und Trocknen der zu reinigenden Transportwägen. Innerhalb der Reinigungsmaschine werden die Transportwägen zumindest zwischen den für den Wasch- bzw. Trocknungsvorgang zuständigen Zonen von einem im Boden der Reinigungsmaschine installierten Fördermittel durch die Maschine hindurch befördert. Die dieser Patentanmeldung zugrunde liegende Lösung zeichnet sich ferner dadurch aus, dass ein oder mehrere Sammeltanks zur Aufnahme von Reinigungsflüssigkeit über einen Saugstutzen und eine Zusatzpumpe mit einem Zwischentank in Verbindung stehen, der wiederum über eine Druckpumpe für die Zuführung und/oder Umwälzung der Reinigungsflüssigkeit mit Sprühdosen verbunden ist, die sowohl in der Wasch- als auch in der Spülzone angebracht sind.

In der US-A-4 807 319 ist eine mobile Reinigungsanlage für Einkaufswägen offenbart. Die Einkaufswägen werden hierbei auf einer Längsseite des Containers in die Reinigungsanlage hineingeschoben, innerhalb des Containers mittels eines Fließbandes parallel zur Längsachse des Containers durch die Waschstrasse befördert und schließlich auf der gegenüberliegenden Seite in gereinigtem Zustand wieder dem Container entnommen.

Gemäß der DE-C-199 36 906 ist eine Reinigungsanlage für "Kleinladungsträger" bekannt, bei der die zu reinigenden Gegenstände während ihres Weges durch die Waschstrasse auf wesentlichen vertikalen Wegabschnitten befördert werden.

Aus der US-A-5,993,739 ist ein mobiles Reinigungssystem für Rollstühle bekannt. Dabei werden die Rollstühle an einer umlaufenden Beförderungskette befestigt und an dieser durch eine Waschkammer transportiert. Der Transportweg verläuft dabei zunächst geradlinig, dann halbkreisförmig im Sinne eines "U-Turn's" und schließlich wiederum geradlinig. Auf diese Weise ist der Einlass und der Auslass für die Rollstühle an ein und derselben Seite des Reinigungssystems gebildet.

AUFGABE DER VORLIEGENDEN ERFINDUNG

Es ist die Aufgabe der vorliegenden Erfindung, eine kostengünstige und leicht zu realisierende mobile Reinigungsanlage für Transportbehältnisse, speziell für Einkaufswägen, bereitzustellen, die eine verfahrenstechnisch günstige Zuführung und/oder Abführung des zu reinigenden bzw. gereinigten Guts erlaubt.

Diese Aufgabe wird durch die Merkmale der unabhängigen Patentansprüche gelöst. Vorteilhafte Ausführungsbeispiele sind in den abhängigen Patentansprüchen definiert.

ZUSAMMENFASSENDE DARSTELLUNG DER VORLIEGENDEN ERFINDUNG

Die zugrunde liegende Erfindung offenbart eine kostengünstige und leicht zu realisierende mobile Reinigungsbzw. Waschanlage für Transportbehältnisse entsprechend der im vorangehenden Abschnitt definierten Aufgabe.

Mit Hilfe dieser mobilen Reinigungsanlage können insbesondere Einkaufswägen, die im Pulk der mobilen Reinigungsanlage zugeführt bzw. nach erfolgter Reinigung wieder abgeführt werden, effizient und schnell gereinigt werden. Dabei ist vorgesehen, dass die der mobilen Reinigungsanlage im Pulk zugeführten, zu reinigenden Einkaufswägen automatisch getrennt und die aus der mobilen Reinigungsanlage wieder im Pulk abgeführten, gereinigten Einkaufswägen automatisch gestapelt werden können. Die mobile Reinigungsanlage ist dabei für einen komplett unabhängigen Betrieb zur Reinigung von circa 2.000 Einkaufswägen pro Tag geeignet.

Da die Waschstraße der erfindungsgemäßen mobilen Reinigungsanlage "U"-förmig verläuft, befinden sich Einlass und Auslass der Waschstraße an derselben Stirnseite der mobilen Reinigungsanlage. Der sich daraus ergebende verfahrenstechnische Vorteil ist, dass die gereinigten Einkaufswägen an derselben Stelle aus der mobilen Reinigungsanlage abgeführt werden können, an der der Anlage die verschmutzten Einkaufswägen zugeführt werden. Die gereinigten und gestapelten Einkaufswägen können also an derselben Stelle abgeholt werden, an der die verschmutzten Einkaufswägen gestapelt zur Reinigung abgestellt werden, so dass ein zeitaufwendiges manuelles Zurückschieben der gereinigten Einkaufswägen zum vereinbarten Abholpunkt entfällt.

Der Verlauf der Waschstrasse ist nicht auf die oben genannte "U"-Form beschränkt. Es sind auch andere horizontale Transportwege in der Waschstrasse möglich. Beispielsweise kann die Waschstrasse derart angeordnet sein, dass ein Einkaufswagen an einer Stirnseite in den Container befördert wird, in diesem zunächst parallel zur Längsachse des Containers weiterbefördert wird, dann einen im Wesentlichen quer zur Längsachse des Containers verlaufenden Wegabschnitt zurücklegt und schließlich wieder auf einem Weg parallel zur Längsachse den Container an der der Einlassseite gegenüberliegenden Seite verlässt.

Auch ist möglich, dass die Waschstrasse mehr als einen quer zur Längsachse des Containers verlaufenden Wegabschnitt aufweist. Dies kann beispielsweise in Form eines Art mäanderförmigen Waschstraßenverlaufes gegeben sein.

Ist die mobile Reinigungsanlage für Einkaufswägen aller Art betriebsbereit, werden die zuvor automatisch voneinander getrennten Einkaufswägen mit Hilfe eines Ketten- oder Bandförderers in die Anlage hinein befördert, nach einem vorgegebenen Programmablauf ausgeblasen, gereinigt bzw. gewaschen, nachgespült und getrocknet und abschließenden Sonderbehandlungen (Aufsprühung von Desinfektions- und/oder Schmiermitteln) unterzogen. Im Anschluss daran werden die gereinigten Einkaufswägen mit Hilfe des Ketten- oder Bandförderers wieder aus der Reinigungsanlage entfernt und automatisch hintereinander gestapelt. Diese Vorgänge wiederholen sich, bis die gewünschte Anzahl der Einkaufswägen gereinigt ist, die mobile Reinigungsanlage einer Wartung bedarf oder die bereitgestellte Vorratsmenge an Frischwasser, Reinigungs-, Desinfektions- und/oder Schmiermitteln, Heizöl, Pressluft etc. erschöpft ist und daher nachgefüllt werden muss.

Die Zu- und Abführung der Einkaufswägen in die beziehungsweise von der Waschanlage betreffend kann die Erfindung - je nach Ausgestaltung - die im folgenden dargestellten Merkmale aufweisen.

Zur Aufnahme eines Pulks von ineinander geschobenen Einkaufswägen ist eine Förderrampe vorgesehen. Am Boden der Förderrampe befindet sich ein federbelasteter Anschlag. Auch Transportleitvorrichtungen für den Pulk können an der Förderrampe montiert sein. Der Pulk wird nun von Hand auf die Förderrampe und bis zu dem Anschlag geschoben.

Zur Fixierung und Weiterförderung der Einkaufswägen ist eine automatische Transportbügelvorrichtung vorgesehen, die einen Transportbügel, ein Seil und eine Linearführungseinheit aufweist. Zunächst wird der Transportbügel zur Fixierung und Weiterförderung der Einkaufswägen geschlossen. Der Transportbügel kann beispielsweise direkt am letzten Einkaufswagen des Pulks angreifen. Der Antrieb des Transportbügels erfolgt über das Seil und zur Führung des Bewegungsablaufes dient die Linearführungseinheit.

Anschließend wird die Förderrampe containerseitig - beispielsweise mittels einer Seilwinde - bis auf das Niveau der Waschanlage angehoben. Für dieses Anheben der Förderrampe ist eine Führung vorgesehen. Auf der entgegengesetzten Seite der Förderrampe kann diese vorzugsweise mit Rollen versehen sein, über die ein Nachbewegen der Förderrampe entlang des Bodens erfolgt.

Sobald die angehobene Seite der Förderrampe das Niveau des Bodens der Waschanlage erreicht hat, wird die Seilwinde mit Hilfe eines Endschalters automatisch gestoppt.

Daraufhin wird die Fixierung des Anschlages gelöst und mittels der oben beschriebenen Transportbügelvorrichtung wird der Pulk um einen Einkaufswagen - also um ein "Stapelmaß" - weiterbefördert. Dies kann ebenfalls automatisch erfolgen.

Nachdem der erste Einkaufswagen des Pulks über den Anschlag befördert worden ist, richtet sich der Anschlag automatisch wieder auf und wird erneut fixiert. Der erste Einkaufswagen ist jetzt vom Pulk getrennt und wird mittels einer Langkettenförderanlage in die erste Waschstation der Waschanlage gezogen. Die Langkettenförderanlage wird beispielsweise über Schienen geführt und mittels Zahnriemen angetrieben.

Nach Beendigung des Waschvorganges befindet sich der Einkaufswagen zunächst in der letzten Waschstation. Von dort wird er mit Hilfe einer Kettenanlage automatisch auf die Förderrampe, die sich noch auf Niveau des Waschstraßenbodens befindet, hinausbefördert.

Mittels einer zweiten Transportbügelvorrichtung, die ebenso wie die erstgenannte einen Transportbügel, ein Seil und eine Linearführungseinheit aufweist, wird der Einkaufswagen auf der Förderrampe aufgefangen.

Sobald der Einkaufswagen vollständig auf der Förderrampe steht, wird er mittels der zweiten Transportbügelvorrichtung um ein "Stapelmaß" automatisch weitergefördert. Dadurch entsteht Platz für den nächsten nachfolgenden Einkaufswagen, der nach Beendigung des Waschvorganges die letzte Waschstation verlässt.

Sobald sich alle Einkaufswägen des Pulks auf der Förderrampe befinden, wird diese mittels der oben beschriebenen Seilwinde zu Boden gelassen. Zur Absenkung der Förderrampe ist eine Führung vorgesehen. Der auf dem Boden befindliche Teil der Förderrampe wird über die oben beschriebenen Rollen bewegt. Schließlich wird der Transportbügel geöffnet und der Pulk von Hand von der Förderrampe geschoben.

An dieser Stelle sei hervorgehoben, dass sich die Erfindung bevorzugt derart ausgestalten lässt, dass die oben dargestellten Abläufe - sofern nicht ausdrücklich anders beschrieben - automatisch erfolgen.

Wie bereits erwähnt, können die Einkaufswägen in hintereinander gestapeltem Zustand zu der mobilen Reinigungsanlage befördert werden. Sie werden dann von einer erfindungsgemäßen Vorrichtung automatisch voneinander getrennt, bevor sie der mobilen Reinigungsanlage zugeführt werden. Dabei werden die Einkaufswägen auf derselben Seite der besagten Reinigungsanlage, auf der sie zugeführt werden, auch wieder abgeführt und automatisch hintereinander gestapelt. Entscheidende Vorteile dieses Systems sind unter anderem, dass die mobile Reinigungsanlage von nur einer Person bedient werden kann und dass die Anlage einen im Vergleich zu herkömmlichen Reinigungsanlagen, bei denen Einkaufswägen monodirektional durch eine gerade verlaufende Waschstraße hindurch geleitet werden, einen viel geringeren Platzbedarf aufweist. Die erfindungsgemäße mobile Reinigungsanlage braucht dabei für die Aktionen während der Durchführung der Reinigungsvorgänge von dem Zugfahrzeug, mit dem die Anlage transportiert wird, nicht abgekoppelt zu werden. Die Entkopplung und Vereinzelung der im Pulk der mobilen Reinigungsanlage zugeführten Einkaufswägen, ihre Beförderung durch die Anlage und die Zusammenführung der Einkaufswägen nach erfolgtem Durchlauf durch die mobile Reinigungsanlage kann dabei an unterschiedliche Größen und Typen von Einkaufswagen angepasst werden.

Vor dem eigentlichen Nassreinigungsvorgang werden die Einkaufswägen im Rahmen eines Trockenreinigungsverfahrens mit Hilfe eines komprimierten Luftstrahls ausgeblasen, damit leichte Feststoffe entfernt werden können und die darauf folgende Nassreinigung nicht behindert wird.

Um die mobile Reinigungsanlage gegen Frosteinwirkung zu schützen, sind Heizvorrichtungen sowie eine automatische Temperaturüberwachung und Temperaturregelung vorgesehen, damit ein ausfallsicherer Betrieb der Anlage auch bei Außentemperaturen unterhalb des Gefrierpunkts möglich ist.

Die erfindungsgemäße mobile Reinigungsanlage für Einkaufswägen kann sich dabei beispielsweise aus insgesamt sechs Stationen zusammensetzen, in denen für jeden der Anlage zugeführten Einkaufswagen nacheinander die folgenden Reinigungsvorgänge stattfinden:

- Station #1a: Ausblasen von leichten Feststoffen und kleinen Schmutzpartikeln (vorschlagsweise z.B. 5 Sekunden pro Einkaufswagen),

- Station #1b: Aufbringen und Einwirkenlassen von chemischen Reinigungsmitteln (vorschlagsweise z.B. 25 Sekunden pro Einkaufswagen),

- Station #2: Waschen der Einkaufswägen mit komprimierten Wasserstrahlen aus rotierenden Hochdruckdüsen, die aus fünf Raumrichtungen (von vorne, hinten, rechts, links und von oben) auf die Einkaufswägen einwirken, wodurch gewährleistet ist, dass eine vollständige Oberflächen-Reinigung der Einkaufswägen erzielt werden kann (vorschlagsweise z.B. 30 Sekunden pro Einkaufswagen),

- Station #3: Reinigung der Einkaufswägen mit rotierenden Bürsten, wobei eine automatische Bewässerung der Bürsten mit Brauchwasser vorgenommen wird (vorschlagsweise z.B. 30 Sekunden pro Einkaufswagen),

- Station #4: feines Nachspülen der Einkaufswägen mit Frischwasser (vorschlagsweise z.B. 30 Sekunden pro Einkaufswagen),

- Station #5: Trocknen der Einkaufswägen durch Zuführung von Heißluft (vorschlagsweise z.B. 30 Sekunden pro Einkaufswagen),

- Station #6: Nachtrocknen der Einkaufswägen durch Zuführung von Heißluft (vorschlagsweise z.B. 30 Sekunden pro Einkaufswagen), danach Aufsprühen von chemischen Desinfektionsmitteln zum Abtöten von Krankheitserregern und/oder Auftragen von Schmiermitteln auf die Radachsen der Einkaufswägen zur Verminderung des Reibungswiderstands zwischen Rädern und Radachsen (vorschlagsweise z.B. je 30 Sekunden pro Einkaufswagen).

Um beim Nachspülen der Einkaufswägen in Station #4 den Verbrauch an Frischwasser zu senken, kann optional eine Vernebelungsvorrichtung verwendet werden, die ein Gemisch aus Luft und Frischwasser erzeugt. Darüber hinaus ist es in der erfindungsgemäßen Lösung vorgesehen, Brauchwasser zu reinigen und für die Reinigung der Einkaufswägen wiederzuverwenden. Zu diesem Zweck werden die verschmutzte Reinigungsflüssigkeit und das Brauchwasser in einer Wasserwiederaufbereitungsanlage durch Filtern und durch Beigabe von chemischen und/oder biologischen Zusätzen gereinigt und dem Reinigungskreislauf wieder zugeführt.

Die zugrunde liegende Erfindung ist, wie ein auf diesem Gebiet tätiger Durchschnittsfachmann leicht erkennen kann, nicht nur auf die oben beschriebenen Ausführungsbeispiele beschränkt. Über die darin offenbarten Merkmale hinaus sind zahlreiche Modifikationen und Variationen möglich, ohne substanziell von dem Anwendungsbereich der vorliegenden Erfindung abzuweichen, wie in den Patentansprüchen offenbart ist.

Das erfindungsgemäße Verfahren kann beispielsweise auch vorteilhaft auf die Reinigung von Fahrzeugen, Lager- und/oder Transportbehältnissen für Waren, Güter und Gegenstände aller Art wie Einkaufskörbe, Servierwagen, Getränkekästen, Kisten, Fässer, Kessel, Tanks, Mülltonnen und/oder Behälter aller Art erweitert werden.

KURZBESCHREIBUNG DER ZEICHNUNGEN

Weitere Vorteile und Zweckmäßigkeiten der zugrunde liegenden Erfindung resultieren aus den untergeordneten abhängigen Patentansprüchen sowie aus der folgenden Beschreibung eines bevorzugten Ausführungsbeispiels der Erfindung, welches in den folgenden Zeichnungen abgebildet ist. Hierin zeigt:

FIG. 1    einen Längsquerschnitt E-F der Einkaufswägen-Zuführung 120, der Einkaufswägen-Abführung 122, des Container-Innenraums 402 sowie der darin befindlichen mobilen Reinigungsanlage 101 (Blickrichtung: von oben),

FIG. 2    einen Längsquerschnitt G-H der Einkaufswägen-Zuführung 120 und des Container-Innenraums 402, wobei sich die klappbaren Rampen 120 und 122 in nicht-angehobenem Zustand befinden (Blickrichtung: von rechts),

FIG. 3    einen Längsquerschnitt C-D der Einkaufswägen-Zuführung 120, des Container-Innenraums 402 sowie der darin befindlichen mobilen Reinigungsanlage 101, wobei sich die klappbaren Rampen 120 und 122 in angehobenem Zustand befinden (Blickrichtung: von rechts) und

FIG. 4    einen Längsquerschnitt A-B der Einkaufswägen-Abführung 122, des Container-Innenraums 402 sowie der darin befindlichen mobilen Reinigungsanlage 101, wobei sich die klappbaren Rampen 120 und 122 in angehobenem Zustand befinden (Blickrichtung: von rechts).

DETAILLIERTE BESCHREIBUNG DER ERFINDUNG

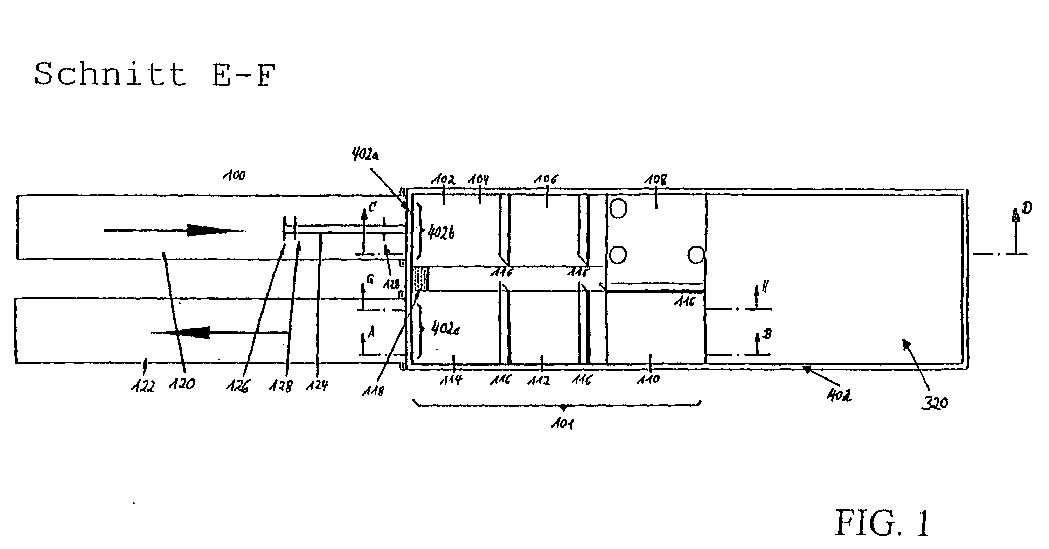

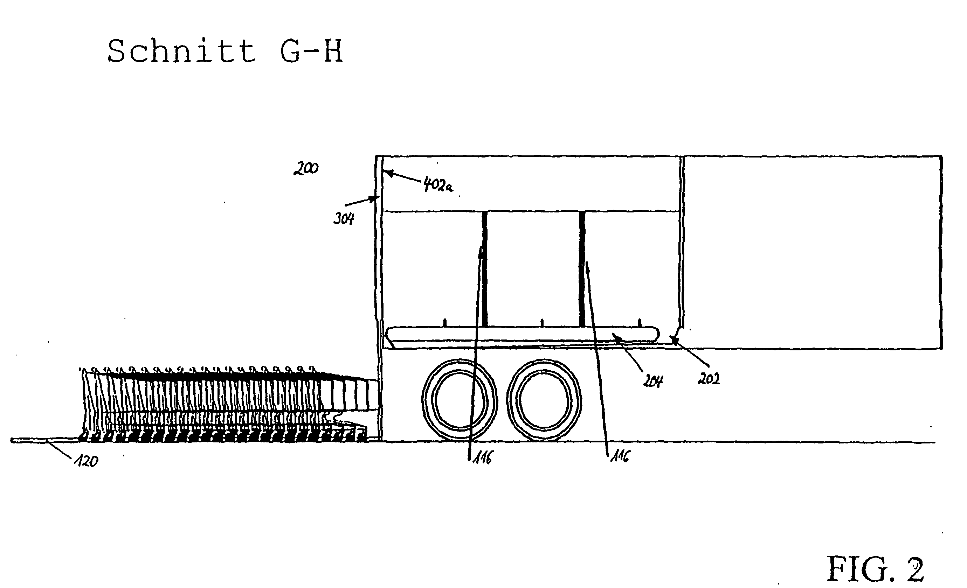

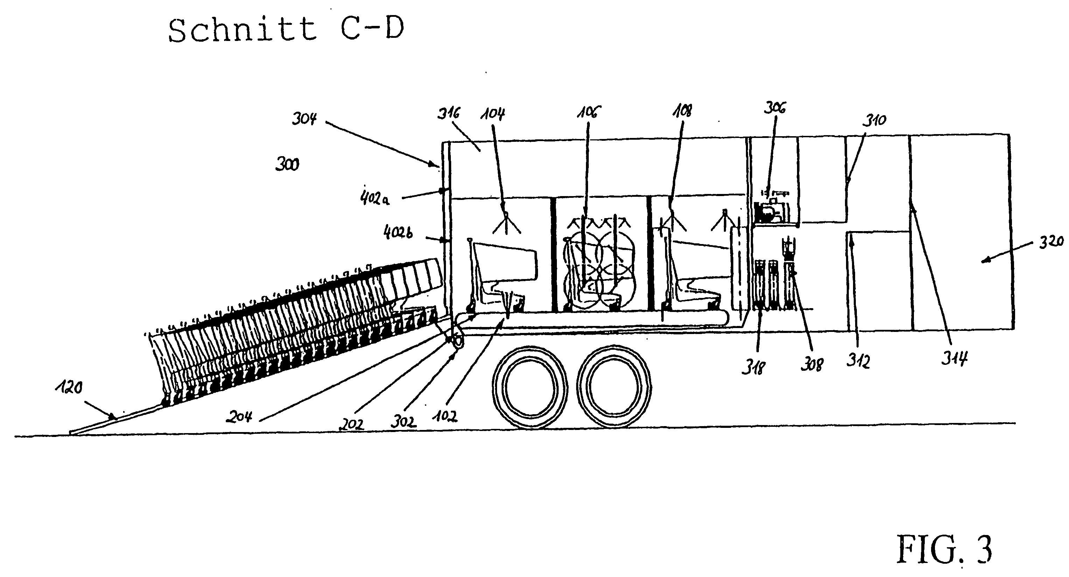

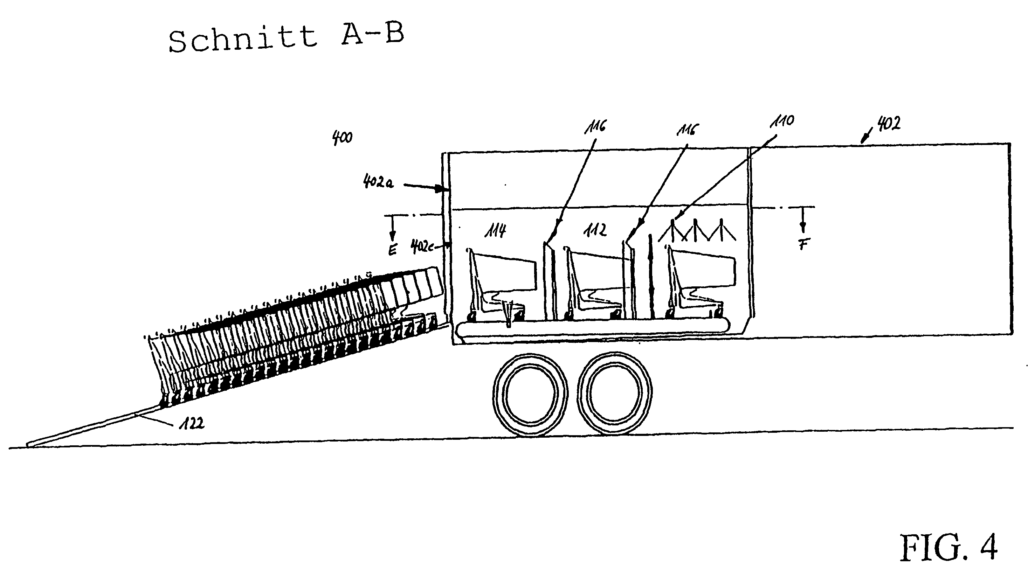

Im Folgenden werden die Funktionen der in einem ersten Ausführungsbeispiel der vorliegenden Erfindung enthaltenen Baugruppen, wie in den Figuren 1 bis 4 abgebildet, näher beschrieben.

Reinigungsstationen

In den einzelnen Reinigungsstationen 102, 104, 106, 108, 110, 112 und/oder 114 werden nach dem bevorzugten Ausführungsbeispiel der zugrunde liegenden Erfindung folgende Reinigungsvorgänge durchgeführt:

Mit Hilfe einer Ausblasvorrichtung in Station 102 werden Feststoffrückstände, Abfallreste und/oder Schmutzpartikel ausgeblasen. Der Reinigungsvorgang in den Stationen 106 bzw. 108 kann durch Zuführung von chemischen Reinigungsmitteln, unter Mitwirkung von Hochdruckwasser und/oder rotierenden, bewässerten Bürsten verstärkt und beschleunigt werden. Für die gereinigten Einkaufswägen wird nach dem bevorzugten Ausführungsbeispiel der zugrunde liegenden Erfindung in Station 110 mindestens ein Nachspülvorgang mit Hilfe von Niederdruckwasser vorgenommen, um Rückstände von eventuell zugeführten chemischen Reinigungsmitteln zu entfernen. Danach wird für die gereinigten Einkaufswägen in den Stationen 112 und 114 je ein Trocknungsvorgang mit Hilfe von zugeführter Heißluft durchgeführt, um das Trocknen der gereinigten Einkaufswägen zu beschleunigen. Nach Beendigung des Trocknungsvorgangs kann optional eine Aufsprühung von chemischen Desinfektionsmitteln auf die gereinigten und getrockneten Einkaufswägen erfolgen, um Krankheitserreger abzutöten. Nach Beendigung des letzten Trocknungsvorgangs kann erfindungsgemäß auch eine Aufbringung von Schmiermitteln für die Radachsen der Einkaufswägen vorgesehen sein, um den Reibungswiderstand zwischen den Rädern und Radachsen der Einkaufswägen zu verringern und somit die Lebensdauer der Räder und Radachsen zu erhöhen und den beim Bewegen der Einkaufswägen hervorgerufenen Geräuschpegel gering zu halten.

Um eine gegenseitige Beeinträchtigung der in den einzelnen Stationen 102, 104, 106, 108, 110, 112 und/oder 114 durchgeführten Reinigungs-, Trocknungs-, Desinfektions- und Wartungsvorgänge bzw. eine unerwünschte Vermischung von Brauch- und Frischwasser sowie der verwendeten chemischen Reinigungs- und/oder Desinfektionsmittel sicher zu vermeiden, können zwischen den einzelnen Stationen 102, 104, 106, 108, 110, 112 und/oder 114 des mobilen Reinigungssystems 101 isolierende Trennwände 116 eingebracht werden. Auf diese Weise kann eine gegenseitige Beeinträchtigung der in den einzelnen Stationen durchgeführten Reinigungs-, Trocknungs-, Desinfektions- und Wartungsvorgänge bzw. eine unerwünschte Vermischung von Brauchwasser und Frischwasser sowie der verwendeten chemischen Reinigungs- und/oder Desinfektionsmittel vermieden werden. Die Trennwände 116 sind in der Höhe verstellbar, seitlich klappbar oder aufrollbar.

Die erfindungsgemäße mobile Reinigungsanlage 101 verfügt ferner über eine komplette Auffangwanne 202 für alle Stationen 102, 104, 106, 108, 110, 112 und/oder 114, in der das abgeleitete Brauchwasser gesammelt und in einen Brauchwassertank 320 geleitet wird. In diese Auffangwanne 202 ist ein Grobsieb 118 integriert sowie eine Überwachungseinheit, die dafür sorgt, dass ausgeblasene grobe Schmutzpartikel nicht in den Brauchwassertank 320 gelangen oder die Zuleitungsrohre verstopfen. Diesem nachgeordnet ist eine Filtereinheit mit austauschbaren Filterelementen, um feine Schmutzpartikel aus dem Brauchwasser zu entfernen, bevor dieses in den Brauchwassertank 320 gelangt, um für weitere Reinigungsvorgänge wiederverwendet werden zu können.

Zuführung, Beförderung und Abführung der Einkaufswägen

Für den Einlass 402b bzw. Auslass 402c der Einkaufswägen können elektrisch, hydraulisch und/oder pneumatisch betriebene Zuführungs- bzw. Abführungsvorrichtungen eingesetzt werden, wie zum Beispiel klappbare Rampen 120 und/oder 122, Hebebühnen, Hubzylinder 304, Förderbänder 204 und/oder Seilwinden 302.

Die zeitliche Koordinierung und Steuerung der Zu- und Abführung der Einkaufswägen sowie die Arbeitsabläufe in den einzelnen Stationen 102, 104, 106, 108, 110, 112 und/oder 114 des mobilen Reinigungssystems 101 wird nach dem bevorzugten Ausführungsbeispiel der zugrunde liegenden Erfindung von einem zentralen Regelungs- und Steuerungssystem durchgeführt, das außerdem die für die Reinigung der Einkaufswägen erforderlichen Randbedingungen regelt.

Bei diesen Randbedingungen kann es sich beispielsweise um die Zuführmenge von Frischwasser, Schmiermitteln und/oder chemischen Reinigungs- bzw. Desinfektionsmitteln, die Abführmenge von Brauchwasser sowie physikalische Parameter wie Temperatur und/oder Druck von Frischwasser, Brauchwasser, Schmiermitteln und/oder chemischen Reinigungs- bzw. Desinfektionsmitteln und die Zeitpunkte der Zu- bzw. Abführung dieser Flüssigkeiten handeln.

Wie insbesondere in Figur 1 ersichtlich, ist gemäß der vorliegenden Erfindung vorgesehen, dass der Einlass 402b zur Einbringung der zu reinigenden Einkaufswägen und der Auslass 402c für die gereinigten Einkaufswägen an derselben Seite 402a des Containers 402 angeordnet sind. Gemäß dem Ausführungsbeispiel ist diese Seite die hintere Stirnseite des Containers. Die vorliegende Erfindung verlässt somit das bekannte Prinzip von Waschstraßen (bei denen der Einlass und der Auslass auf jeweils voneinander abgewandten Seiten der Waschstraße erfolgt) dahingehend, dass Einlass und Auslass am selben Ende des Containers angeordnet sind. Dies hat den Vorteil, dass der Container 402 auch während des Betriebs im Sinne eines Aufliegers, beispielsweise eines LKWs, auf diesem verbleiben kann und nicht etwa abgekoppelt, abgesenkt oder dergleichen werden muss. Darüber hinaus hat diese Ausbildung den Vorteil, dass der hintere Bereich 320 des Containers 402 in wirtschaftlicher Weise für die Unterbringung von Aggregaten, Behältern, etc. verwendet werden kann.

Wie in Figur 1 ebenfalls ersichtlich, ist gemäß dem Ausführungsbeispiel vorgesehen, dass die eigentliche "Waschstraße" wenigstens zwei parallele Spuren aufweist. Das heißt, wenigstens zwei Stationen der "Waschstraße" sind seitlich gegeneinander versetzt bezüglich der Längsachse des Containers 402 angeordnet. Insgesamt ergibt sich eine U-förmige Anordnung der Waschstraße, wobei die beiden Schenkel des "U" die Spuren darstellen, in denen Waschstationen angeordnet sind, und der Verbindungsschenkel des "U" einer Beförderung der Einkaufswägen oder dergleichen quer zu der Längsachse des Containers 402 entspricht.

Wie bereits gesagt verläuft die Waschstraße gemäß der erfindungsgemäßen mobilen Reinigungsanlage 101 im wesentlichen U-förmig, so dass sich der Einlass 402b und der Auslass 402c der Waschstraße an derselben Stirnseite 402a des Containers 402 befinden. Daraus ergibt sich der verfahrenstechnische Vorteil, dass die gereinigten Einkaufswägen an derselben Stelle aus der mobilen Reinigungsanlage abgeführt werden, an der der Anlage auch die verschmutzen Einkaufswägen zugeführt werden. Neben der vorteilhaften Aufteilung des Containers 402 ergibt sich der weitere Vorteil, dass die gereinigten und gestapelten Einkaufswägen an derselben Stelle wieder abgeholt werden können, an der die verschmutzten Einkaufswägen zuvor (gestapelt) zur Reinigung abgestellt werden. Somit entfällt ein zeitaufwendiges manuelles Zurückschieben der gereinigten Einkaufswägen zu einem Abholpunkt.

Der Container 402 weist in seinem Inneren eine bodenseitige Beförderungsvorrichtung 204 auf, die die Einkaufswägen in wenigstens einem Abschnitt 102, 104 und/oder 106 bzw. 110 und/oder 112 im Wesentlichen parallel zu der Längsachse des Containers 402 und in wenigstens einem weiteren Abschnitt 108 und/oder 110 im Wesentlichen quer zur Längsachse des Containers 402 befördert. Die Einkaufswägen werden dabei in drei Richtungen transportiert: zuerst parallel zur Längsachse des Containers 402 in diesen hinein (von den Stationen #1a bzw. #1b zur Station #3), dann quer zur Längsachse des Containers 402 (von Station #3 zur Station #4) und schließlich parallel zur Längsachse des Containers 402 (von Station #4 zur Station #6) und aus diesem heraus.

Zur automatischen Förderung der Einkaufswägen von der Rampe in die Waschstrasse ist eine Langkettenförderanlage vorgesehen. Dabei erfolgt die Führung über Schienen und der Antrieb mittels Zahnriemen. Innerhalb der Waschstrasse erfolgt die automatische Beförderung der Einkaufswägen mittels eines Kettenantriebs.

Mittels Pneumatik wird der Einkaufswagen von der zweiten in die dritte Waschstation geschoben. Von der dritten zur vierten Waschstation erfolgt die Förderung quer zur Längsachse des Containers, bei der der Einkaufswagen mittels zwei pneumatischen Parallelgreifern auf der Stirnseite gefasst und über eine pneumatisch angetriebene Lineareinheit in die vierte Waschstation geschoben wird. Die Beförderung von der vierten zur fünften und weiter zur sechsten Waschstation erfolgt dann wiederum mittels Pneumatik und Kettenförderer.

Um die zu reinigenden Einkaufswägen der mobilen Reinigungsanlage 101 im Container 402 zuzuführen, werden Einkaufswägen in K Pulks

$$P_k \equiv P_{k,1}' := \{EKW_{k,1},...,EKW_{k,n},...,EKW_{k,N}\}$$

(für $1 \leq k \leq K$),

bestehend aus je N Einkaufswägen (N = 20), manuell oder maschinell auf eine heruntergelassene klappbare Rampe 120 geschoben, bis der vorderste Einkaufswagen des jeweiligen Pulks $P_{k,1}'$ ($EKW_{k,1}$) einen Rückhaltezylinder 126 am Ende der klappbaren Rampe 120 berührt. Als Nächstes wird das Seil einer Seilwinde 302, welches am Ende mit einem speziellen Haken versehen ist, beim letzten Einkaufswagen des Pulks $P_{k,1}'$ ($EKW_{k,N}$) eingehängt. Danach wird die klappbare Rampe 120 mit Hilfe des Hubzylinders 304 angehoben. Die Seilwinde 302, welche oberhalb bzw. unterhalb der Einkaufswägen des Pulks $P_{k,1}'$ angeordnet sein kann, hält dabei die Einkaufswägen in Position. Nach dem Anheben der klappbaren Rampe 120 werden die letzten N-1 Einkaufswägen $EKW_{k,2}$ bis $EKW_{k,N}$ des Pulks $P_{k,1}'$ mit Hilfe der Seilwinde 302 bis zum Rückhaltezylinder 126 am Ende der klappbaren Rampe 120 befördert, wobei gleichzeitig der erste Einkaufswagen des Pulks $P_{k,1}'$ ($EKW_{k,1}$) mit Hilfe eines automatischen Vereinzelungsmechanismus, bestehend aus einem Zylinder 124 zur Längsbeförderung der Einkaufswägen und quer zur Längsachse des Zylinders 124 angebrachten Mitnahmezylindern 128, vom Pulk $P_{k,1}'$ getrennt wird.

Der nach dem Abtrennen des ersten Einkaufswagens ($EKW_{k,1}$) zurückbleibende Pulk soll im Folgenden als

$$P_{k,2}' := \{EKW_{k,2},...,EKW_{k,N}\} \subset P_{k,1}'$$

(für $1 \leq k \leq K$)

bezeichnet werden.

Nachdem der vom Pulk $P_{k,1}'$ getrennte Einkaufswagen $EKW_{k,1}$ in die mobile Reinigungsanlage 101 hinein befördert wurde, hält die Seilwinde 302 die Einkaufswägen in Position bzw. befördert die restlichen N-2 Einkaufswägen des Pulks $P_{k,2}'$ ($EKW_{k,3}$ bis $EKW_{k,N}$) wieder bis zum Rückhaltezylinder 126 am Ende der klappbaren Rampe 120, wobei gleichzeitig der erste Einkaufswagen des Pulks $P_{k,2}'$ ($EKW_{k,2}$) mit Hilfe des oben erwähnten automatischen Vereinzelungsmechanismus, bestehend aus dem Zylinder 124 zur Längsbeförderung der Einkaufswägen und den quer zur Längsachse des Zylinders 124 angebrachten Mitnahmezylindern 128, vom Pulk $P_{k,2}'$ getrennt wird.

Im Folgenden soll der nach dem Abtrennen des n-ten Einkaufswagens ($EKW_{k,n}$) zurückbleibende Pulk allgemein als

$$P_{k,n+1}' := \{EKW_{k,n+1},...,EKW_{k,N}\} \subset P_{k,n}' \subset ... \subset P_{k,1}'$$

(für $1 \leq k \leq K$)

bezeichnet werden. Für $1 \leq n \leq N-2$ werden dann die folgenden Schritte durchgeführt:

Nachdem der vom Pulk $P_{k,n}'$ getrennte Einkaufswagen $EKW_{k,n}$ in die mobile Reinigungsanlage 101 hinein befördert wurde, hält die Seilwinde 302 die Einkaufswägen in Position bzw. befördert die restlichen N-(n+1) Einkaufswägen des Pulks $P_{k,n+1}'$ ($EKW_{k,n+2}$ bis $EKW_{k,N}$) wieder bis zum Rückhaltezylinder 126 am Ende der klappbaren Rampe 120, wobei gleichzeitig der erste Einkaufswagen des Pulks $P_{k,n+1}'$ ($EKW_{k,n+1}$) mit Hilfe des oben erwähnten automatischen Vereinzelungsmechanismus, bestehend aus dem Zylinder 124 zur Längsbeförderung der Einkaufswägen und den quer zur Längsachse des Zylinders 124 angebrachten Mitnahmezylindern 128, vom Pulk $P_{k,n+1}'$ getrennt wird.

Im letzten Schritt bleibt nach dem Abtrennen des (N-1)-ten Einkaufswagens ($EYW_{k,N-1}$) nur noch der "Pulk"

$$P_{k,N}' := \{EKW_{k,N}\} \subset P_{k,N-1}' \subset ... \subset P_{k,1}'$$

(für $1 \leq k \leq K$)

zurück, der nur noch aus einem einzigen Einkaufswagen ($EKW_{k,N}$) besteht. Auch dieser letzte Einkaufswagen ($EKW_{k,N}$) wird dann mit Hilfe der Seilwinde 302 in die mobile Reinigungsanlage 101 hinein befördert.

Automatische Vereinzelung der mobilen Reinigungsanlage zugeführter Einkaufswägen

Wie bereits weiter oben angesprochen, funktioniert der automatsche Vereinzelungsmechanismus mit Hilfe pneumatisch bzw. hydraulisch betätigter Rückhaltezylinder 126 bzw. Mitnahmezylinder 128, die quer zur Längsachse eines Zylinders 124 angebracht sind, welcher zur Längsbeförderung der Einkaufswägen dient. Der Zylinder 124 verfügt dabei über zwei Mitnahmezylinder 128, die jeweils hinter den vier Rädern eines in die mobile Reinigungsanlage 101 hineinzubefördernden Einkaufswagens eingreifen. Hat der Zylinder 124 nach der Längsbeförderung eines Einkaufs-

wagens EKW$_i$ seine Anschlagposition erreicht, befinden sich die Vorderräder des betreffenden Einkaufswagens EKW$_i$ auf einem Ketten- oder Bandförderer 204 und werden von diesem weitertransportiert. Die Rückhaltezylinder 126 halten während der Betätigung des Zylinders 124 den nächsten Einkaufswagen EKW$_{i+1}$ in seiner Position, damit dessen Vorgänger (EKW$_i$) der mobilen Reinigungsanlage 101 zugeführt werden kann. Ist Einkaufswagen EKW$_i$ in der mobilen Reinigungsanlage 101, geben die Rückhaltezylinder 126 den Einkaufswagen EKW$_{i+1}$ frei, damit er durch die Seilwinde 302 in die Anschlagposition gebracht werden kann. Der Ketten- oder Bandförderer 204 ist vorzugsweise im Boden des Containers 402 angeordnet und mit speziellen Mitnehmereinheiten ausgestattet, mit deren Hilfe die Einkaufswägen durch die mobile Reinigungsanlage 101 hindurch befördert werden. Diese Mitnehmereinheiten greifen vorzugsweise hinter den Rädern eines Einkaufswagens ein.

Energieversorgung der mobilen Reinigungsanlage

Zur autarken Energieversorgung aller elektrisch, hydraulisch und/oder pneumatisch betriebenen Zuführungs-, Reinigungs- und Abführungsvorrichtungen für die Einkaufswägen kann mindestens ein Stromgenerator verwendet werden, um gewährleisten zu können, dass die mobile Reinigungsanlage 101 unabhängig von Fremdenergiequellen betrieben werden kann.

Weitere Merkmale bevorzugter Ausführungsbeispiele der erfindungsgemäßen Lösung:

In dem bevorzugten Ausführungsbeispiel der zugrunde liegenden Erfindung erfolgt die Entriegelung der Einkaufswägen-Münzschlitzschlösser vor Zuführung der Einkaufswägen in die mobile Reinigungsanlage 101 sowie die Verriegelung der Einkaufswägen-Münzschlitzschlösser nach Abführung der Einkaufswägen aus der mobilen Reinigungsanlage 101 von Hand. Die Erfindung lässt sich aber auch auf einfache Weise um einen automatischen Entriegelungs- bzw. Verriegelungsmechanismus erweitern.

Die erfindungsgemäße Lösung sieht auch eine Wasserwiederaufbereitungsanlage vor, die unter Zuhilfenahme von chemischen und/oder biologischen Zusätzen das nach jedem Reinigungsvorgang angefallene und aufgefangene Brauchwasser reinigt, damit es für weitere Reinigungsvorgänge wiederverwendet werden kann. Dazu sind mindestens je eine Auffangwanne 202, ein Gitter, ein grobes Sieb 118 und/oder ein Filter mit austauschbaren Filterelementen zum Sammeln von Brauchwasser und Auffangen darin befindlicher grober und/oder feiner Schmutzpartikel vorgesehen, um zu gewährleisten, dass gereinigtes Brauchwassers nach Rückführung in die mobile Reinigungsanlage 101 zur Reinigung von Einkaufswägen wiederverwendet werden kann.

Um die mobile Reinigungsanlage 101 vor Frosteinwirkung zu schützen, kann zusätzlich eine Heizvorrichtung mit Temperaturüberwachung vorgesehen sein.

Darüber hinaus verfügt die mobile Reinigungsanlage 101 nach dem bevorzugten Ausführungsbeispiel der zugrunde liegenden Erfindung auch über

- eine Vielzahl von Pumpen für die Zuführung bzw. Abführung von Frisch- bzw. Brauchwasser, Reinigungs-, Desinfektions- und Schmiermittel,

- eine Vielzahl von Ventilen als Rückschlagsicherungen, Absperrvorrichtungen und/oder Druckverminderer,

- Filter zur Reinigung des verschmutzten Brauchwassers,

- Rohrleitungen für die Zuführung bzw. Abführung von Frisch- bzw. Brauchwasser, Reinigungs, Desinfektions- und Schmiermittel,

- Behälter bzw. Tanks zur Speicherung von Frisch- bzw. Brauchwasser, Reinigungs-, Desinfektions- und Schmiermittel sowie Heizöl,

- Messgeräte zur Füllstands-, Temperatur- und Druckmessung,

- eine Vorrichtung zur Regelung der Betriebstemperatur,

- eine Gebläsevorrichtung zum Ausblasen von feinen Schmutzpartikeln,

- eine Gebläsevorrichtung zur Bereitstellung von Heißluft für die Trocknungsvorgänge sowie

- eine Wasserwiederaufbereitungsanlage zur Reinigung des verschmutzten Brauchwassers,

die in den Figuren aus Übersichtlichkeitsgründen nicht eingezeichnet sind.

Die Bedeutung der mit Bezugszeichen versehenen Symbole in den Figuren 1 bis 4 kann der beigefügten Bezugszeichenliste entnommen werden.

Bezugszeichenliste

| Nr. | Symbol |
|---|---|
| 100 | Längsquerschnitt E-F der Einkaufswägen-Zuführung, der Einkaufswägen-Abführung, des Container-Innenraums sowie der darin befindlichen mobilen Reinigungsanlage (Blickrichtung: von oben) |
| 101 | mobile Reinigungsanlage, bestehend aus insgesamt sechs Reinigungsstationen |
| 102 | Station #1a: Ausblasen von leichten Feststoffen und kleinen Schmutzpartikeln (vorschlagsweise z.B. 5 Sekunden pro Einkaufswagen) |
| 104 | Station #1b: Aufbringen und Einwirkenlassen von chemischen Reinigungsmitteln (vorschlagsweise z.B. 25 Sekunden pro Einkaufswagen) |
| 106 | Station #2: Waschen der Einkaufswägen mit komprimierten Wasserstrahlen aus rotierenden Hochdruckdüsen, die aus fünf Raumrichtungen (von vorne, hinten, rechts, links und von oben) auf die Einkaufswägen einwirken, wodurch gewährleistet ist, dass eine vollständige Oberflächen-Reinigung der Einkaufswägen erzielt werden kann (vorschlagsweise z.B. 30 Sekunden pro Einkaufswagen) |
| 108 | Station #3: Reinigung der Einkaufswägen mit rotierenden Bürsten, wobei eine Bewässerung der Bürsten mit Brauchwasser vorgenommen wird (vorschlagsweise z.B. 30 Sekunden pro Einkaufswagen) |
| 110 | Station #4: feines Nachspülen der Einkaufswägen mit Frischwasser (vorschlagsweise z.B. 30 Sekunden pro Einkaufswagen) |
| 112 | Station #5: Trocknen der Einkaufswägen durch Zuführung von Heißluft (vorschlagsweise z.B. je 30 Sekunden pro Einkaufswagen) |
| 114 | Station #6: Nachtrocknen der Einkaufswägen durch Zuführung von Heißluft und Aufsprühen von chemischen Desinfektionsmitteln zum Abtöten von Krankheitserregern und/oder Auftragen von Schmiermitteln auf die Radachsen der Einkaufswägen zur Verminderung des Reibungswiderstands zwischen Rädern und Radachsen (vorschlagsweise z.B. je 30 Sekunden pro Einkaufswagen) |
| 116 | Trennwand zwischen den einzelnen Stationen |
| 118 | Grobsieb mit Überwachungseinheit zum Rückhalten ausgeblasener fester Schmutzpartikel |
| 120 | klappbare Rampe für die Zuführung der Einkaufswägen in die mobile Reinigungsanlage vor Reinigungsbeginn |
| 122 | klappbare Rampe für die Abführung und Stapelung der Einkaufswägen aus der mobilen Reinigungsanlage nach Reinigungsende |
| 124 | Zylinder zur Längsbeförderung der Einkaufswägen bis zum Ketten- oder Bandförderer 204 |
| 126 | quer zur Längsachse des Zylinders 124 angebrachter Rückhaltezylinder, der als Anschlagpunkt zur Abtrennung ("Vereinzelung") des vordersten Einkaufswagens von im Pulk der mobilen Reinigungsanlage zugeführten Einkaufswägen dient |
| 128 | quer zur Längsachse des Zylinders 124 angebrachter Mitnahmezylinder, der hinter den Vorderrädern eines von seinem Pulk abgetrennten Einkaufswagens eingreift und diesen durch die Längsbewegung des Zylinders 124 vom Pulk entfernt ("vereinzelt") |
| 200 | Längsquerschnitt G-H der Einkaufswägen-Zuführung und des Container-Innenraums, wobei sich die klappbaren Rampen 120 und 122 in nicht-angehobenem Zustand befindet (Blickrichtung: von rechts) |
| 202 | Auffangwanne zum Sammeln des Brauchwassers und Einleiten desselben in einen Brauchwassertank |
| 204 | Ketten- oder Bandförderer im Boden des Containers, ausgestattet mit speziellen Mitnehmereinheiten, mit deren Hilfe die Einkaufswägen durch die mobile Reinigungsanlage hindurch befördert werden |

(fortgesetzt)

| Nr. | Symbol |
|---|---|
| 300 | Längsquerschnitt C-D der Einkaufswägen-Zuführung, des Container-Innenraums sowie der darin befindlichen mobilen Reinigungsanlage, wobei sich die klappbaren Rampen 120 und 122 in angehobenem Zustand befindet (Blickrichtung: von rechts) |
| 302 | Seilwinde zum Halten und Weiterbefördern der Einkaufswägen für deren automatische Zuführung in die mobile Reinigungsanlage |
| 304 | Hubzylinder für die Zuführung der der Einkaufswägen in die mobile Reinigungsanlage |
| 306 | Hochdruckpumpe |
| 308 | Niederdruckpumpe |
| 310 | Regelungs- und Steuerungseinheit zur Koordination der zeitlichen Abläufe der Reinigungsvorgänge sowie zur Regelung physikalischer Parameter (Temperatur, Druck) |
| 312 | Stromgenerator zur autarken Stromversorgung für alle verwendeten Aggregate |
| 314 | kombinierter Vorratstank für Frischwasser und Brauchwasser |
| 316 | Tanks für Frisch- bzw. Brauchwasser, Reinigungs-, Desinfektions- bzw. Schmiermittel sowie Heizöl |
| 318 | Filtereinheit mit austauschbaren Filterelementen zur Entfernung von feinen Schmutzpartikeln aus dem Brauchwasser |
| 320 | Flüssigkeitstank mit Trennmembran für zwei unterschiedliche Flüssigkeitsmedien |
| 400 | Längsquerschnitt A-B der Einkaufswägen-Abführung, des Container-Innenraums sowie der darin befindlichen mobilen Reinigungsanlage, wobei sich die klappbaren Rampen 120 und 122 in angehobenem Zustand befindet (Blickrichtung: von rechts) |
| 402 | Sattelaufleger oder Container als Gehäuse für die mobile Reinigungsanlage, in das die zu reinigenden Einkaufswägen eingebracht und aus dem sie in gereinigtem Zustand wieder herausgeführt werden |
| 402a | Hintere Stirnseite des Sattelauflegers bzw. Containers 402 |
| 402b | Einlass zur Zuführung der zu reinigenden Einkaufswägen in die mobile Reinigungsanlage |
| 402c | Auslass zur Abführung der gereinigten Einkaufswägen aus der mobilen Reinigungsanlage |

**Patentansprüche**

1. Mobiles Reinigungssystem für Einkaufswägen oder gleichartige Transporteinrichtungen, aufweisend:

   einen Container (402), in den die zu reinigenden Einkaufswägen eingebracht und aus dem sie in gereinigtem Zustand wieder herausgeführt werden, wobei in dem Container (402) Vorrichtungen (102, 104, 106, 108, 110, 112 und/oder 114) zum Reinigen der zugeführten Einkaufswägen vorgesehen sind, und

   wobei der Container (402) eine Beförderungsvorrichtung (204) für die Einkaufswägen aufweist, die zwei Spuren umfasst, die im Wesentlichen parallel zur Längsachse des Containers (402) verlaufen,
   **dadurch gekennzeichnet,**
   **dass** die beiden Spuren durch eine dritte Spur für einen Querversatz der Einkaufswägen verbunden sind und die dritte Spur im Wesentlichen quer zur Längsachse verläuft.

2. Mobiles Reinigungssystem nach Anspruch 1,
   **dadurch gekennzeichnet,**
   **dass** die Beförderungsvorrichtung bodenseitig ausgestaltet ist.

3. Mobiles Reinigungssystem nach Anspruch 1 oder 2,
   **dadurch gekennzeichnet,**
   **dass** die Beförderungsvorrichtung (204) die Einkaufswägen in wenigstens einem Abschnitt im Wesentlichen parallel zur Längsachse des Containers (402) in den Container (402) hinein befördert und sie in einem weiteren Abschnitt im Wesentlichen parallel zur Längsachse des Containers (402) aus dem Container (402) heraus befördert.

4. Mobiles Reinigungssystem nach einem der Ansprüche 1 bis 3,
**dadurch gekennzeichnet,**
**dass** der Einlass (402b) zur Einbringung der zu reinigenden Einkaufswägen und der Auslass (402c) der gereinigten Einkaufswägen an derselben Seite (402a) des Containers (402) angeordnet sind.

5. Mobiles Reinigungssystem nach einem der Ansprüche 1 bis 4,
**dadurch gekennzeichnet,**
**dass** der Einlass (402b) und der Auslass (402c) durch eine zusammenhängende Öffnung in dem Container (402) gebildet sind.

6. Mobiles Reinigungssystem nach einem der Ansprüche 1 bis 5,
**dadurch gekennzeichnet,**
**dass** der Container (402) im Wesentlichen quaderförmig ist und sowohl der Einlass (402b) als auch der Auslass (402c) für die Einkaufswägen an einer Stirnseite (402a) des Containers (402) angeordnet sind.

7. Mobiles Reinigungssystem nach einem der Ansprüche 1 bis 6,
**dadurch gekennzeichnet,**
**dass** in dem Container (402) in dem von dem Einlass (402b) und Auslass (402c) abgewandten Bereich ein Flüssigkeitstank (320) mit Trennmembran für zwei unterschiedliche Flüssigkeitsmedien vorgesehen ist.

8. Mobiles Reinigungssystem nach einem der Ansprüche 1 bis 7,
**dadurch gekennzeichnet,**
**dass** in dem Container (402) wenigstens zwei Stationen (102, 104, 106, 108, 110, 112 und/oder 114) räumlich getrennt vorgesehen sind, in denen die Einkaufswägen während einer eingestellten Zeitdauer behandelt werden.

9. Mobiles Reinigungssystem nach einem der Ansprüche 1 bis 8,
**dadurch gekennzeichnet,**
**dass** an der Einlassseite des Containers (402) eine Vorrichtung (124, 126 und/oder 128) zum automatischen Vereinzeln von im Pulk antransportierten Einkaufswägen vorgesehen ist.

10. Mobiles Reinigungssystem nach Anspruch 9,
**dadurch gekennzeichnet,**
**dass** die Vorrichtung zum Vereinzeln den jeweils ersten Einkaufswagen des Pulks vom Pulk abtrennt.

11. Mobiles Reinigungssystem nach Anspruch 9 oder 10,
**dadurch gekennzeichnet,**
**dass** an der Auslassseite des Containers (402) eine Vorrichtung zum Zusammenführen und/oder Verkoppeln der im vereinzelten Zustand im Inneren des Containers (402) behandelten Einkaufswägen zu einem Pulk vorgesehen ist.

12. Mobiles Reinigungssystem nach einem der Ansprüche 9 bis 11,
aufweisend:

   - eine Förderrampe, deren eine Seite automatisch bis wenigstens auf das Niveau des Containerbodens angehoben werden kann,
   - wenigstens eine auf der Förderrampe montierte Transportbügelvorrichtung für Einkaufswägen, und
   - wenigstens einen Anschlag für Einkaufswägen im Boden der Förderrampe.

13. Mobiles Reinigungssystem nach einem der Ansprüche 1 bis 12,
**dadurch gekennzeichnet,**
**dass** zwischen den einzelnen Stationen (102, 104, 106, 108, 110, 112 und/oder 114) des mobilen Reinigungssystems (101) isolierende Trennwände (116) eingebracht sind, die in der Höhe verstellbar, seitlich klappbar oder aufrollbar sind.

14. Mobiles Reinigungssystem nach einem der Ansprüche 1 bis 13,

**dadurch gekennzeichnet,**

**dass** für den Einlass (402b) bzw. Auslass (402c) der Einkaufswägen elektrisch, hydraulisch und/oder pneumatisch betriebene Zuführungs- und/oder Abführungsvorrichtungen vorgesehen sind, wie zum Beispiel klappbare Rampen (120 und/oder 122), Hebebühnen, Hubzylinder (304), Förderbänder (204) und/oder Seilwinden (302).

15. Mobiles Reinigungssystem nach einem der Ansprüche 1 bis 14,
    **dadurch gekennzeichnet,**
    **dass** zur zeitlichen Koordinierung und Steuerung der Zu- bzw. Abführung der Einkaufswägen sowie der Arbeitsabläufe in den einzelnen Stationen (102, 104, 106, 108, 110, 112 und/oder 114) des mobilen Reinigungssystems (101) ein zentrales Regelungs- und Steuerungssystem vorgesehen ist.

16. Mobiles Reinigungssystem nach einem der Ansprüche 1 bis 15,
    **dadurch gekennzeichnet,**
    **dass** neben Einkaufswägen auch Fahrzeuge, Lager- und/oder Transportbehältnisse für Waren, Güter und Gegenstände aller Art wie Einkaufskörbe, Servierwägen, Getränkekästen, Kisten, Fässer, Kessel, Tanks, Mülltonnen und/oder Behälter aller Art gereinigt werden können.

17. Verfahren zur Reinigung von Einkaufswägen, gemäß dem die Einkaufswägen in einen Container (402) eingebracht und nach ihrer Reinigung wieder herausgeführt werden,
    wobei in dem Container (402) Vorrichtungen (102, 104, 106, 108, 110, 112 und/oder 114) zum Reinigen der zugeführten Einkaufswägen vorgesehen sind,
    wobei die zu reinigenden Einkaufswägen in dem Container (402) in zwei im Wesentlichen parallel zu der Längsachse des Containers angeordneten Abschnitten und einem weiteren im Wesentlichen quer zur Längsachse des Containers (402) angeordneten Abschnitt befördert werden.

18. Verfahren nach Anspruch 17,
    **dadurch gekennzeichnet,**
    **dass** die Einkaufswägen mittels einer bodenseitigen Beförderungsvorrichtung befördert werden.

19. Verfahren nach Anspruch 17 oder 18,
    **dadurch gekennzeichnet,**
    **dass** die Einkaufswägen in einem der beiden im Wesentlichen parallel zur Längsachse des Containers (402) angeordneten Abschnitte in den Container (402) hinein befördert und sie in dem anderen im Wesentlichen parallel zur Längsachse des Containers (402) angeordneten Abschnitt aus dem Container (402) heraus befördert werden.

20. Verfahren nach einem der Ansprüche 17 bis 19,
    **dadurch gekennzeichnet,**
    **dass** das Einbringen der zu reinigenden Einkaufswägen und das Herausführen der gereinigten Einkaufswägen an derselben Seite (402a) des Containers (402) erfolgt.

21. Verfahren nach einem der Ansprüche 17 bis 20,
    **dadurch gekennzeichnet,**
    **dass** das Einbringen und das Herausführen der Einkaufswägen mittels einer zusammenhängenden Öffnung (402b und 402c) in dem Container (402) erfolgt.

22. Verfahren nach einem der Ansprüche 17 bis 21,
    **dadurch gekennzeichnet,**
    **dass** der Container (402) im Wesentlichen quaderförmig ist und sowohl das Einbringen und das Herausführen der Einkaufswägen an derselben Stirnseite (402a) des Containers (402) erfolgt.

23. Verfahren nach einem der Ansprüche 17 bis 22,
    **dadurch gekennzeichnet,**
    **dass** die Einkaufswägen in dem Container (402) in wenigstens zwei räumlich getrennten Stationen (102, 104, 106, 108, 110, 112 und/oder 114) während der eingestellten Zeitdauer behandelt werden.

24. Verfahren nach einem der Ansprüche 17 bis 23, **gekennzeichnet durch** die Schritte:

    - Zuführung von Einkaufswägen in zu einem Pulk zusammen geschobenen Zustand, und

- automatisches Vereinzeln der im Pulk zugeführten Einkaufswägen, um sie im Inneren des Containers (402) im vereinzelten Zustand behandeln zu können.

25. Verfahren nach Anspruch 24,
**dadurch gekennzeichnet,**
**dass** beim Vereinzeln der jeweils erste Einkaufswagen des Pulks vom Pulk abgetrennt wird.

26. Verfahren nach Anspruch 24 oder 25,
**gekennzeichnet durch**
den Schritt der Zusammenführung und/oder Verkopplung von im vereinzelten Zustand im Inneren des Containers (402) behandelten Einkaufswägen zu einem Pulk.

27. Verfahren nach einem der Ansprüche 24 bis 26, **gekennzeichnet durch** folgende Schritte:

a) Schieben des Pulks auf eine Förderrampe bis an einen Anschlag,
b) Schließen eines Transportbügels am letzten Einkaufswagen des Pulks,
c) Anheben der Förderrampe containerseitig bis auf wenigstens das Niveau des Containerbodens,
d) Lösung des Anschlags,
e) Vorwärts-Transport des Pulks,
f) automatisches Wiederaufrichten des Anschlags nach Überfahren des Anschlags **durch** den ersten Einkaufswagen des Pulks mit folgendem Stop des Pulks **durch** den Anschlag,
g) Transport des vom Pulk gelösten Einkaufswagens in die Waschstrasse,
h) Wiederholung der Schritte d) bis g) für den Transport der folgenden Einkaufswägen in die Waschstrasse.

28. Verfahren nach einem der Ansprüche 24 bis 27,
**dadurch gekennzeichnet,**
**dass** der Einlass (402b) bzw. Auslass (402c) der Einkaufswägen mittels elektrisch, hydraulisch und/oder pneumatisch betriebener Zuführungs- und/oder Abführungsvorrichtungen (120, 122, 204, 302 und/oder 304) erfolgt.

**Claims**

1. A mobile cleaning system for shopping trolleys or transport devices of this kind, having:

a container (402) into which the shopping trolleys to be cleaned are introduced and from which they are removed in the cleaned state, wherein devices (102, 104, 106, 108, 110, 112 and/or 114) for cleaning the shopping trolleys supplied are provided in the container (402), and wherein the container (402) comprises a conveyor device (204) for the shopping trolleys, including two tracks which run substantially parallel to the longitudinal axis of the container (402), **characterised in that** the two tracks are joined by a third track for a lateral offset of the shopping trolleys and the third track runs substantially transversely to the longitudinal axis.

2. A mobile cleaning system according to Claim 1, **characterised in that** the conveyor device is incorporated in the floor.

3. A mobile cleaning system according to Claim 1 or 2, **characterised in that** in at least one section, the conveyor device (204) conveys the shopping trolleys into the container (402) substantially parallel to the longitudinal axis of the container (402) and in a further section conveys them out of the container (402) substantially parallel to the longitudinal axis of the container (402).

4. A mobile cleaning system according to any one of Claims 1 to 3, **characterised in that** the intake (402b) for introducing the shopping trolleys to be cleaned and the outlet (402c) for the cleaned shopping trolleys are arranged on the same side (402a) of the container (402).

5. A mobile cleaning system according to any one of Claims 1 to 4, **characterised in that** the intake (402b) and the outlet (402c) are formed by a connected opening in the container (402).

6. A mobile cleaning system according to any one of Claims 1 to 5, **characterised in that** the container (402) has substantially the form of a parallelepiped and both the intake (402b) and the outlet (402c) for the shopping trolleys are arranged at one end face (402a) of the container (402).

7. A mobile cleaning system according to any one of Claims 1 to 6, **characterised in that** a liquid tank (320) with a separating membrane for two different liquid media is provided in the container (402) in the area remote from the intake (402b) and the outlet (402c).

8. A mobile cleaning system according to any one of Claims 1 to 7, **characterised in that** at least two spatially separate stations (102, 104, 106, 108, 110, 112 and/or 114) are provided in the container (402) in which the shopping trolleys are treated for a set duration.

9. A mobile cleaning system according to any one of Claims 1 to 8, **characterised in that** a device (124, 126 and/ or 128) is provided on the intake side of the container (402) for automatically separating shopping trolleys transported in the row.

10. A mobile cleaning system according to Claim 9, **characterised in that** the separating device in each case separates the first shopping trolley of the row from the row.

11. A mobile cleaning system according to Claim 9 or 10, **characterised in that** a device for bringing together and/or coupling the shopping trolleys treated in the separate state inside the container (402) to form a horizontally stacked row is provided on the outlet side of the container (402).

12. A mobile cleaning system according to any one of Claims 9 to 11, comprising:

   - a conveyor ramp one end of which can be automatically raised to at least the level of the container floor;
   - at least one transport shackle arrangement mounted on the conveyor ramp for transporting shopping trolleys, and
   - at least one stop for shopping trolleys located in the floor of the conveyor ramp.

13. A mobile cleaning system according to any one of Claims 1 to 12, **characterised in that** isolating partitions (116) which are height-adjustable and can be folded aside or rolled up are inserted between the individual stations (102, 104, 106, 108, 110, 112 and/or 114) of the mobile cleaning system (101).

14. A mobile cleaning system according to any one of Claims 1 to 13, **characterised in that** electrically, hydraulically and/or pneumatically driven feed and/or removal devices, such as hinged ramps (120 and/or 122), lifting platforms, raising cylinders (304), conveyor belts (204) and/or winches (302) are provided for the intake (402b) and outlet (402c) of the shopping trolleys.

15. A mobile cleaning system according to any one of Claims 1 to 14, **characterised in that** a central regulation and control system is provided for the temporal coordination and control of the feeding and removal of the shopping trolleys and of the work sequences in the individual stations (102, 104, 106, 108, 110, 112 and/or 114) of the mobile cleaning system (101).

16. A mobile cleaning system according to any one of Claims 1 to 15, **characterised in that**, in addition to shopping trolleys, vehicles, storage and/or transport containers for merchandise, goods and objects of all kinds such as shopping baskets, serving trolleys, beverage boxes, crates, barrels, boilers, tanks, refuse bins and/or containers of all kinds can be cleaned.

17. A method for cleaning shopping trolleys whereby the shopping trolleys are introduced into a container (402) and removed therefrom after being cleaned, wherein devices (102, 104, 106, 108, 110, 112 and/or 114) for cleaning the shopping trolleys supplied are provided in the container (402), whereby the shopping trolleys to be cleaned are conveyed into the container (402) in two sections arranged substantially parallel to the longitudinal axis of the container and in a further section arranged substantially transverse to the longitudinal axis of the container (402).

18. A method according to Claim 17, **characterised in that** the shopping trolleys are conveyed by means of a conveyor device incorporated in the floor.

19. A method according to Claim 17 or 18, **characterised in that** in one of the two sections arranged substantially parallel to the longitudinal axis of the container (402) the shopping trolleys are conveyed into the container (402) and in the other section arranged substantially parallel to the longitudinal axis of the container (402) they are conveyed out of the container (402).

20. A method according to any one of Claims 17 to 19, **characterised in that** the feeding in of the shopping trolleys to be cleaned and the removal of the cleaned shopping trolleys take place at the same side (402a) of the container (402).

21. A method according to any one of Claims 17 to 20, **characterised in that** the feeding in and removal of the shopping trolleys are effected by means of a connected opening (402b and 402c) in the container (402).

22. A method according to any one of Claims 17 to 21, **characterised in that** the container (402) has substantially the form of a parallelepiped and both the feeding in and the removal of the shopping trolleys take place at the same end face (402a) of the container (402).

23. A method according to any one of Claims 17 to 22, **characterised in that** the shopping trolleys are treated in the container (402) for a set duration in at least two spatially separate stations (102, 104, 106, 108, 110, 112 and/or 114).

24. A method according to any one of Claims 17 to 23, **characterised by** the following steps:

- delivery of shopping trolleys in the state of a horizontally stacked row, and
- automatic separation of the shopping trolleys delivered in the horizontally stacked row in order to be able to treat them in the separated state inside the container (402).

25. A method according to Claim 24, **characterised in that** during separation the first shopping trolley of the row is in each case separated from the row.

26. A method according to Claim 24 or 25, **characterised by** the step of bringing together and/or coupling shopping trolleys treated in the separate state inside the container (402) to form a horizontally stacked row.

27. A method according to any one of Claims 24 to 26, **characterised by** the following steps:

a) pushing the stacked row on to a conveyor ramp up to a stop,
b) closing a conveyor shackle on the last shopping trolley of the row,
c) raising the conveyor ramp at the container end to at least the level of the container floor,
d) releasing the stop,
e) transporting the row forwards,
f) automatically moving the stop back upright after the first shopping trolley in the row has passed over the stop with subsequent stopping of the row by the stop,
g) transporting the shopping trolley detached from the row into the washing installation,
h) repeating steps d) to g) for the transportation of the following shopping trolleys into the washing installation.

28. A method according to any one of Claims 24 to 27, **characterised in that** the intake (402b) and outlet (402c) of the shopping trolleys are carried out by means of electrically, hydraulically and/or pneumatically driven feed and/or removal devices (120, 122, 204, 302 and/or 304).

**Revendications**

1. Système mobile de nettoyage pour chariots de supermarché ou dispositifs de transport de type similaire, comportant :

un conteneur (402) dans lequel les chariots à nettoyer sont introduits et duquel ils sont à nouveau extraits à l'état nettoyé, des dispositifs (102, 104, 106, 108, 110, 112 et/ou 114) pour le nettoyage des chariots amenés étant prévus dans le conteneur (402), et
le conteneur (402) comportant un dispositif de convoyage (204) des chariots, lequel comprend deux pistes qui s'étendent sensiblement parallèlement à l'axe longitudinal du conteneur (402),

**caractérisé**

**en ce que** les deux pistes sont reliées par une troisième piste pour un décalage transversal des chariots, et la troisième piste s'étend sensiblement transversalement à l'axe longitudinal.

2. Système mobile de nettoyage selon la revendication 1,
   **caractérisé**
   **en ce que** le dispositif de convoyage est conçu côté fond.

3. Système mobile de nettoyage selon la revendication 1 ou 2,
   **caractérisé**
   **en ce que** le dispositif de convoyage (204) transporte les chariots dans au moins une section sensiblement parallèlement à l'axe longitudinal du conteneur (402), à l'intérieur du conteneur (402) et, dans une autre section, il les transporte, sensiblement parallèlement à l'axe longitudinal du conteneur (402), à l'extérieur du conteneur (402).

4. Système mobile de nettoyage selon l'une des revendications 1 à 3,
   **caractérisé**
   **en ce que** l'entrée (402b) pour introduire les chariots à nettoyer et la sortie (402c) des chariots nettoyés sont disposées sur le même côté (402a) du conteneur (402).

5. Système mobile de nettoyage selon l'une des revendications 1 à 4,
   **caractérisé**
   **en ce que** l'entrée (402b) et la sortie (402c) sont formées par une ouverture d'un seul tenant pratiquée dans le conteneur (402).

6. Système mobile de nettoyage selon l'une des revendications 1 à 5,
   **caractérisé**
   **en ce que** le conteneur (402) est sensiblement de forme parallélépipédique et l'entrée (402b) comme la sortie (402c) pour les chariots sont disposées sur une face frontale (402a) du conteneur (402).

7. Système mobile de nettoyage selon l'une des revendications 1 à 6,
   **caractérisé**
   **en ce que** dans le conteneur (402), dans la zone tournée à l'opposé de l'entrée (402b) et de la sortie (402c), il est prévu un réservoir de liquides (320) avec membrane de séparation pour deux milieux liquides différents.

8. Système mobile de nettoyage selon l'une des revendications 1 à 7,
   **caractérisé**
   **en ce que** dans le conteneur (402) sont prévus au moins deux postes (102, 104, 106, 108, 110, 112 et/ou 114), séparés dans l'espace, dans lesquels les chariots sont traités pendant une durée réglée.

9. Système mobile de nettoyage selon l'une des revendications 1 à 8,
   **caractérisé**
   **en ce que** sur le côté d'entrée du conteneur (402) il est prévu un dispositif (124, 126 et/ou 128) pour la séparation automatique des chariots transportés groupés.

10. Système mobile de nettoyage selon la revendication 9,
    **caractérisé**
    **en ce que** le dispositif de séparation sépare du groupe le premier chariot du groupe.

11. Système mobile de nettoyage selon la revendication 9 ou 10,
    **caractérisé**
    **en ce que** sur le côté de sortie du conteneur (402) il est prévu un dispositif pour réunir et/ou coupler en un groupe les chariots traités à l'état séparé à l'intérieur du conteneur (402).

12. Système mobile de nettoyage selon l'une des revendications 9 à 11,
    comportant

    - une rampe de transport dont un côté peut être automatiquement relevé au moins jusqu'au niveau du fond du conteneur,
    - au moins un dispositif à étrier de transport, monté sur la rampe de transport, pour les chariots, et

- au moins une butée pour les chariots dans le fond de la rampe de transport.

13. Système mobile de nettoyage selon l'une des revendications 1 à 12, **caractérisé**
**en ce qu'**entre les différents postes (102, 104, 106, 108, 110, 112 et/ou 114) du système mobile de nettoyage (101) sont placées des cloisons isolantes (116) qui peuvent être réglées en hauteur, rabattues sur le côté ou roulées.

14. Système mobile de nettoyage selon l'une des revendications 1 à 13, **caractérisé**
**en ce que** pour l'entrée (402b) ou la sortie (402c) des chariots il est prévu des dispositifs d'amenée et/ou d'évacuation fonctionnant de manière électrique, hydraulique et/ou pneumatique, tels que par exemple des rampes rabattables (120 et/ou 122), des plates-formes de levage, des cylindres de levage (304), des bandes de transport (204) et/ou des treuils (302).

15. Système mobile de nettoyage selon l'une des revendications 1 à 14, **caractérisé**
**en ce que** pour la coordination temporelle et la commande de l'amenée ou de l'évacuation des chariots ainsi que des séquences de travail dans les différents postes (102, 104, 106, 108, 110, 112 et/ou 114) du système mobile de nettoyage (101), il est prévu un système central de régulation et de commande.

16. Système mobile de nettoyage selon l'une des revendications 1 à 15, **caractérisé**
**en ce qu'**outre des chariots de supermarché on peut nettoyer aussi des véhicules, des récipients de stockage et/ou de transport pour des marchandises, des articles et objets de tous types tels que des paniers de supermarché, des chariots de restaurant, des caisses à boissons, des caisses, des tonneaux, des chaudières, des réservoirs, des conteneurs à ordures et/ou des récipients de tous types.

17. Procédé de nettoyage de chariots de supermarché selon lequel les chariots sont introduits dans un conteneur (402) et sont extraits à nouveau après leur nettoyage, dans le conteneur (402) étant prévus des dispositifs (102, 104, 106, 108, 110, 112 et/ou 114) pour le nettoyage des chariots amenés, les chariots à nettoyer étant transportés dans le conteneur (402) dans deux sections disposées sensiblement parallèlement à l'axe longitudinal du conteneur et dans une autre section disposée sensiblement transversalement à l'axe longitudinal du conteneur (402).

18. Procédé selon la revendication 17, **caractérisé**
**en ce que** les chariots sont transportés au moyen d'un dispositif de convoyage côté fond.

19. Procédé selon la revendication 17 ou 18, **caractérisé**
**en ce que** les chariots sont transportés à l'intérieur du conteneur (402), dans l'une des deux sections disposées sensiblement parallèlement à l'axe longitudinal du conteneur (402), et ils sont extraits du conteneur (402) dans l'autre section disposée sensiblement parallèlement à l'axe longitudinal du conteneur (402).

20. Procédé selon l'une des revendications 17 à 19, **caractérisé**
**en ce que** l'introduction des chariots à nettoyer et l'extraction des chariots nettoyés s'effectuent sur le même côté (402a) du conteneur (402).

21. Procédé selon l'une des revendications 17 à 20, **caractérisé**
**en ce que** l'introduction et l'extraction des chariots s'effectuent au moyen d'une ouverture (402b, 402c) d'un seul tenant pratiqué dans le conteneur (402).

22. Procédé selon l'une des revendications 17 à 21, **caractérisé**
**en ce que** le conteneur (402) est de forme sensiblement parallélépipédique et l'introduction comme l'extraction des chariots s'effectuent sur la même face frontale (402a) du conteneur (402).

**23.** Procédé selon l'une des revendications 17 à 22,
**caractérisé**
**en ce que** les chariots sont traités dans le conteneur (402), dans au moins deux postes (102, 104, 106, 108, 110, 112 et/ou 114) séparés dans l'espace, pendant la durée réglée.

**24.** Procédé selon l'une des revendications 17 à 23,
**caractérisé par** les étapes suivantes :

- amenée de chariots à l'état groupé et
- séparation automatique des chariots amenés groupés, afin de pouvoir les traiter à l'état séparé à l'intérieur du conteneur (402).

**25.** Procédé selon la revendication 24,
**caractérisé**
**en ce que** lors de la séparation, le premier chariot du groupe est séparé du groupe.

**26.** Procédé selon la revendication 24 ou 25,
**caractérisé par**
l'étape de réunion et/ou du couplage en un groupe de chariots traités à l'état séparé à l'intérieur du conteneur (402).

**27.** Procédé selon l'une des revendications 24 à 26,
**caractérisé**
**par** les étapes suivantes :

    a) poussée du groupe sur une rampe de transport jusqu'à une butée,
    b) fermeture d'un étrier de transport sur le dernier chariot du groupe,
    c) relevage de la rampe de transport côté conteneur au moins jusqu'au niveau du fond du conteneur,
    d) déverrouillage de la butée,
    e) transport vers l'avant du groupe,
    f) redressement automatique de la butée après que le premier chariot du groupe est passé sur la butée, avec arrêt suivant du groupe par la butée,
    g) transport du chariot séparé du groupe dans la ligne de lavage,
    h) répétition des étapes d) à g) pour le transport des chariots suivants dans la ligne de lavage.

**28.** Procédé selon l'une des revendications 24 à 27,
**caractérisé**
**en ce que** l'entrée (402b) et la sortie (402c) des chariots s'effectuent au moyen de dispositifs d'amenée et/ou d'évacuation (120, 122, 204, 302 et/ou 304) fonctionnant de manière électrique, hydraulique et/ou pneumatique.

Schnitt E-F

FIG. 1

EP 1 399 343 B1

Schnitt G-H

FIG. 2

EP 1 399 343 B1

Schnitt C-D

FIG. 3

Schnitt A-B

FIG. 4

EP 1 399 343 B1